# EUROPEAN PATENT APPLICATION

(11) **EP 0 987 079 A2**
(43) Date of publication of application: **22.03.2000**
(21) Application number: 99115951.8
(22) Date of filing: 13.08.1999
(51) Int. Cl.: B23K 9/10, B23K 11/24

(54) **Welding machine with improved regulating devices, and relevant method**

(30) Priority: 31.08.1998 IT PC980021
(71) Applicant: Esseti S.r.l., 36030 Costabissara VI (IT)
(72) Inventor: Terzo, Maurizio, 36100 Vicenza VI (IT)
(74) Representative: La Ciura, Salvatore

(57) **Abstract**

A Welding machine is described, with improved devices for regulating the output power, comprising an array of relays (4) connected to the loops of the main transformer (1), a logic control device (7) apt to select said relays and connected to a memory (8) wherein the parameters relating to a number of welding situations are stored, and means, controlled by the operator, apt to send to said logic information relating to the welding that must be performed, wherein said control logic comprises:
- input devices (6) apt to generate signal as a function of the kind of work one must perform;
- a memory (8) in which a table containing the data relating to a number of welding situation are stored;
- a processor (7) apt to receive signals from said input means, and to read from said table the parameters corresponding to the welding situation inputted by the operator via said input means;
- an interface (9) apt to receive data from said processor and to transmit them to a decoder device;
- an array of relays (4), controlled by said processor via said decoder means and connected to the loops of the main transformer.

## Description

The present invention relates to a welding machine provided with improved devices for the control of the output power, such as to allow the operator to set the welding parameters simply selecting, by means of an input device provided with an easy-to-use interface, the welding regulation needed for that moment.

These characteristics, apart from making the operator's task easier, allow to change from a kind of welding to another without interrupting the welding operations for going and setting new regulations on the generator.

Moreover, the operator does not the need know, for every machine, the output parameters that correspond to the different regulations.

For this purpose the switch provided on the generator of the traditional machines has been substituted by an array of power relays controlled by the main circuit of the machine, which automatically selects each time the right sequence of relays, as a function of the kind of work set by the operator.

This array of relays is connected to the primary circuit of the transformer and an input device is provided, connected to a control logic in which a table with the parameters corresponding to a plurality of welding situations has been previously stored.

Means are also provided, apt to receive the signals coming from said logic and to actuate, in accordance with said signals, the corresponding relays.

In the welding machines of known type, a switch is used in order to vary the power supplied by the generator.

Said switch is used for selling the levels of the output energy, by varying the ratio between the number of loops of the primary transformer by manually selecting the number of loops itself, so as to get a different static characteristic, as a function on the chosen manual selection.

This known solution has several different limitations, because every time the working condition change, for example when one must weld pieces of different thickness, the user must stop welding, go to the generator which is usually placed several dozens of meters far ― especially in the case of dockyards ― must set the new parameter values, come back to the place where he was working, test the new settings and start working again.

Therefore with the machines of a known type it is not possible to pre-set one or more parameters as a function of one or more working conditions, but one needs each time to manually set the generator and test if the regulation he has set achieves the needed results, every time stopping the work and going to the generator to change the set-ups.

In the recent years electronic welding machines have also been developed, which allow the power output to be set even at a certain distance.

Said electronic welding machines, for example in case of thyristor welding machines, don't achieve the same performances as the normal welding machines, while the most up- to-dated welding machines, for example the inverter welding machines or the chopper welding machines, grant good results but are very expensive.

This is the reason why in this field welding machines are needed, that can provide the performances requested for this kind of work, but at a not excessive cost.

In particular it would be opportune to make welding machines like the conventional ones, thus using most of the components already used and tested, and upgrading them with devices that allow the user to set the different parameters as a function of the welding conditions that are encountered from time to time, without stopping his work to go where the generator is.

The problem is now solved by the present invention which provides a welding machine with improved regulation devices, wherein the switch placed on the generator is substituted by an array of power relays driven by a logic through an interface.

Said logic, depending on the input set by the operator, selects the right sequence of relays from a memory in which the parameters corresponding to the different welding situations have been previously stored.

The present invention will now be described in details, as a non limitative example, and reference is made to the following drawings wherein:
- Figure 1 shows the simplified wiring diagram of the control system of a known welding machine.
- Figure 2 shows the simplified wiring diagram of the control system of a welding machine in accordance with the invention.

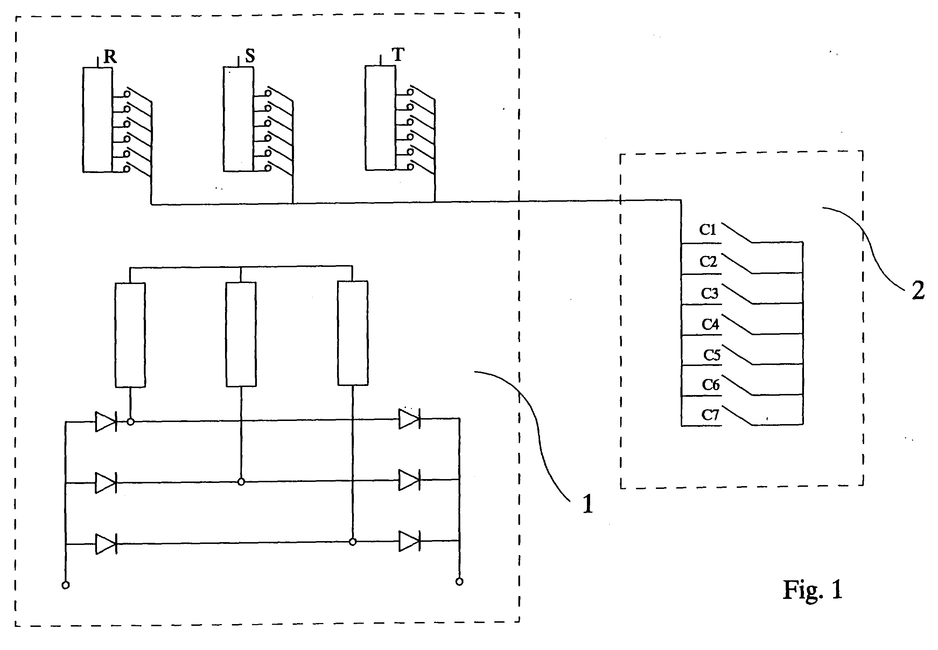

Figure 1 shows a simplified scheme of a known welding machine, in which the loops of the main transformer, shown as 1, are provided with a series of connections selectively controlled by one or more switches 2, placed In the front part of the machine.

In this way it is possible, for example by closing the contacts C1 and C7, to select the highest number of loops and obtain the lowest output power, while by selecting e.g. the contacts C3 and C4 the lowest number of loops is selected, to obtain the highest output power that can be supplied by the machine.

It is a matter, as said before, of a manual selection which has the above indicated inconveniences.

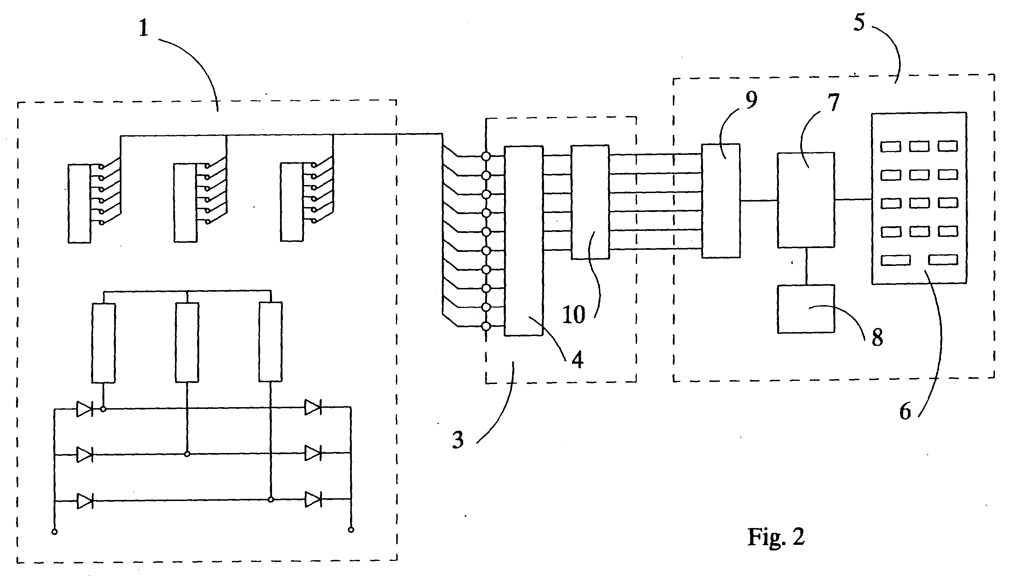

In accordance with the invention (see fig. 2), instead of switch 2 a board 3 is provided, upon which an array of relays 4 is placed which open and close the contacts connected to the loops of the primary, in order to select each time the required loops ratio.

In accordance with the invention, the machine comprises also a "function" board 5 which comprises, for example, a potentiometer or a keyboard placed on the machine, or placed on the cable feeding apparatus, or on the torch, or on a remote control.

Said potentiometer or this keyboard are the input devices used by the operator to input in the machine a data corresponding to a pre-set welding condition.

Besides the input device 6, on the function board 15 a logic is mounted, comprising a CPU 7 and a memory 8 wherein a series of groups of parameters have been previously stored, each group of parameters corresponding to a different working situation.

Said CPU is connected to an interface 9, which in turn is connected to a decoder 10, which receives the signal the CPU sends through the interface 9 and, in accordance with said signal, controls the sequence of relays corresponding to the selected welding situation.

The input device will allow the user to set a working situation, for example by inputting the thickness of the plate to be welded, or any other parameter relating to the kind of work one must perform.

The logic fitted on the machine will provide, as a function of the inputted data, to select the corresponding parameters from the memorised table and to switch the relays on in order to achieve, at the output, the necessary power without the need for the user to know, for each machine, the output values corresponding to the chosen selections.

With this system, when the working conditions vary, the operator must not stop his work to go to the generator for setting the new parameters, but he could only set new data by means of the input device; the logic fitted on the machine will select the corresponding right data from the memorised table and will send, through the interface 9, the output signals which, received and decoded by the decoder 10, will switch on the relays which select, on the transformer, the number of loops required for the selected work.

Various modifications and variations could be provided, within the scope of the of the invention as defined by the appended claims.

## Claims

1. Welding machine characterised by the fact of being provided with an array of relays (4) connected to the loops of the main transformer (1), and means (7, 8) apt to select the right sequence of said relays (4) as a function of the kind of work selected by the user.

2. Welding machine characterised by the fact of being provided with:
- an array of relays (4) connected to the loops of the main transformer (1),
- a logic control device (7) apt to select said relays (4) and that is connected to a memory (8) wherein the parameters relating to a number of welding situations are stored, and
- means (6), controlled by the operator, apt to send to said logic (7), the information relating to the welding that must be performed.

3. Welding machine in accordance with claim 2, characterised by the fact that said logic comprises:
• input devices (6) apt to generate a signal as a function of the kind of work one must perform;
• a memory (8) in which a table containing the data relating to a number of welding situation are stored;
• a processor (7) apt to receive signals from said input devices, and to read from said table the parameters corresponding to the welding situation inputted by the operator via said input means (6);
• an interface (9) apt to receive data from said processor (7) and to transmit them to a decoder device (10);
• an array of relays (4), controlled by said processor (7) via said decoder means (10) and connected to the loops of the main transformer(1).

4. Method for the setting of a welding machine, characterised by the fact of providing the following steps:
• input, by the operator, of data corresponding to a certain welding condition;
• processing of said data by a processor;
• reading, from a memorised table, of the values of a series of regulation parameters as a function of said data relating to the welding condition inputted by the operator;
• actuating a sequence of relays of an array of power relays, connected to the loops of the transformer.
